(19) **Europäisches Patentamt / European Patent Office / Office européen des brevets**

(11) **EP 2 860 984 B1**

(12) **FASCICULE DE BREVET EUROPEEN**

(45) Date de publication et mention de la délivrance du brevet:
**25.03.2020 Bulletin 2020/13**

(51) Int Cl.:
***H04N 21/418*** *(2011.01)* ***H04N 21/4623*** *(2011.01)*
***G06F 9/48*** *(2006.01)*

(21) Numéro de dépôt: **14172364.3**

(22) Date de dépôt: **13.06.2014**

(54) **Méthode de traitement de messages de contrôle et module de sécurité pour la mise en oeuvre de cette méthode**

Methode zur Verarbeitung von Kontrolldaten, und Sicherheitsmodul für die Umsetzung dieser Methode

Method for processing control messages and security module for implementing said method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.10.2013 EP 13188117**

(43) Date de publication de la demande:
**15.04.2015 Bulletin 2015/16**

(73) Titulaire: **Nagrastar L.L.C.**
**Englewood, CO 80112 (US)**

(72) Inventeurs:
• **Keomany, Jean**
**1022 Chavannes-près-Renens (CH)**
• **Golaz, Daniel**
**1329 Bretonnières (CH)**
• **Mazeau, Philippe**
**74200 Allinges (FR)**
• **Bussy, Jean-Luc**
**1304 Cossonay-ville (CH)**
• **Erard, Sébastien**
**1018 Lausanne (CH)**
• **Beals, William**
**Englewood, 80111 Colorado (US)**
• **Hamrick, John D**
**Englewood, 80111 Colorado (US)**

(74) Mandataire: **Grünecker Patent- und Rechtsanwälte PartG mbB Leopoldstraße 4 80802 München (DE)**

(56) Documents cités:
**EP-A1- 1 705 915 US-A1- 2006 085 828**

• **"Ordonnancement temps réel", , 31 décembre 2000 (2000-12-31), XP055162877, Extrait de l'Internet: URL:http://197.14.51.10:81/pmb/collections /Techniques de lingenieur/itcd5/s/S3/s8055.pdf [extrait le 2015-01-16]**

## Description

## DOMAINE TECHNIQUE

La présente invention concerne une méthode de traitement de messages destinés à permettre l'accès à du contenu à accès conditionnel.

De façon plus détaillée, cette méthode concerne la gestion des priorités lorsque plusieurs messages sont reçus dans un laps de temps court et doivent être traités selon un certain ordre pour permettre l'accès à du contenu.

Cette méthode est particulièrement adaptée au contexte de la télévision à péage.

La présente invention concerne également un module de sécurité destiné à mettre en œuvre cette méthode.

## TECHNIQUE ANTERIEURE

La transmission de données chiffrées ou de contenu à accès conditionnel est bien connue dans le domaine de la télévision à péage, où du contenu chiffré est généralement diffusé par des émetteurs terrestres, par satellite ou par un réseau câblé vers un certain nombre d'abonnés, chaque abonné possédant une unité multimédia associée à, ou contenant un module de sécurité permettant de déchiffrer le contenu chiffré en vue de sa visualisation.

Le module de sécurité est en charge des opérations de sécurité et est associé à l'unité multimédia ou à un récepteur. Un tel module de sécurité comporte d'une part un module à accès conditionnel connu sous l'acronyme CAK (Conditional Access Kernel) et d'autre part, un module de traitement. Le module à accès conditionnel est en charge de la gestion des priorités des messages qui seront traités par le module de traitement. Ce module de traitement effectue les étapes de vérification et/ou d'authentification, et s'occupe également de traiter les messages qui lui sont transmis et de renvoyer le résultat du traitement. Un tel module de traitement peut être réalisé en particulier selon quatre formes distinctes. L'une d'elles est une carte à microprocesseur, une carte à puce, ou plus généralement un module électronique (ayant une forme de clé, de badge,...). Un tel module est généralement amovible et connectable au récepteur. La forme avec contacts électriques est la plus utilisée, mais n'exclu pas une liaison sans contact par exemple de type ISO 14443.

Une deuxième forme connue est celle d'un boîtier de circuit intégré placé, généralement de façon définitive et inamovible, dans le boîtier du récepteur. Une variante est constituée d'un circuit monté sur un socle ou connecteur tel qu'un connecteur de module SIM.

Dans une troisième forme, le module de traitement est intégré dans un boîtier de circuit intégré ayant également une autre fonction, par exemple dans un module de désembrouillage du décodeur ou le microprocesseur du décodeur.

Dans une quatrième forme de réalisation, le module de traitement n'est pas réalisé sous forme matérielle, mais sa fonction est mise en œuvre sous forme uniquement logicielle.

Etant donné que dans les quatre cas, bien que le niveau de sécurité diffère, la fonction est identique, on parlera de module de traitement quelle que soit la manière de réaliser sa fonction ou la forme que peut prendre ce module. Dans les quatre formes décrites ci-dessus, le module de traitement a des moyens d'exécution d'un programme (CPU) stocké dans sa mémoire. La collaboration entre le module à accès conditionnel (CAK) et le module de traitement permet au module de sécurité d'effectuer les opérations de sécurité, de vérifier les droits, d'effectuer un déchiffrement ou d'activer un module de déchiffrement etc.

Dans un système type de télévision à péage, le contenu brouillé ou chiffré peut être désembrouillé ou déchiffré au moyen d'un mot de contrôle. Afin d'améliorer la sécurité du système, le mot de contrôle est généralement changé selon un intervalle, nommé cryptopériode, relativement court, par exemple de dix secondes. Toutes les 10 secondes, ou pour chaque cryptopériode, chaque abonné reçoit, dans un message de contrôle ECM (Entitlement Control Message), le mot de contrôle nécessaire au déchiffrement du contenu chiffré afin de permettre le visionnage ou l'accès aux données transmises. Pendant la durée d'une cryptopériode, un même message de contrôle ou des messages de contrôle contenant les mêmes mots de contrôle sont envoyés à intervalle régulier, par exemple toutes les 50 ms. Cette répétition des messages permet à un utilisateur qui arrive sur un canal déterminé d'accéder aux mots de contrôle qui lui sont nécessaires pour déchiffrer le contenu du canal déterminé sans devoir attendre jusqu'à la fin de la cryptopériode.

Le mot de contrôle lui-même est chiffré par une clé de transmission et est transmis sous forme chiffrée dans le message de contrôle ECM. Le contenu chiffré et le mot de contrôle chiffré sont reçus par une unité multimédia qui, si l'abonné est à jour avec son abonnement ou plus généralement, s'il dispose des droits d'accès correspondants, a accès à la clé d'utilisation stockée dans un module de sécurité. Le mot de contrôle chiffré est déchiffré par le module de sécurité au moyen de la clé de transmission. Le module de sécurité transmet le mot de contrôle au décodeur. Le contenu chiffré est déchiffré par le décodeur au moyen du mot de contrôle.

La clé de transmission est régulièrement changée, par exemple tous les mois. Un message de gestion (EMM Entitlement Management Message) est reçu tous les mois par le décodeur et est transmis au module de sécurité. Le message de gestion contient la clé de transmission sous forme chiffrée. Une clé attribuée au module de sécurité lui permet de déchiffrer la clé de transmission chiffrée.

Les modules de sécurité actuellement utilisés pour traiter les messages de contrôle ont majoritairement une capacité de traitement limitée. En particulier, le module de traitement ne peut traiter qu'un message à la fois, ce qui implique une mémorisation et un traitement séquentiel des messages lorsque plusieurs messages sont reçus par une unité multimédia dans un intervalle de temps court. Récemment, les fabricants de décodeurs destinés à la télévision à péage ou à accès conditionnel ont introduit des tuners à large bande qui sont capables de recevoir un nombre important de flux de contenu et de messages, par exemple 8, 16, 32 voire plus de flux. Ceci peut poser un problème. En effet, si un nombre de messages trop important est reçu simultanément ou pendant une durée relativement courte, il est possible que le module de sécurité ne soit pas en mesure de traiter tous les messages reçus. Ceci entraîne le risque qu'une partie du contenu ne puisse pas être déchiffrée et que l'utilisateur se trouve devant un écran noir. Ceci peut en particulier être le cas si la gestion de l'ordre de traitement des messages n'est pas bien faite.

Actuellement, ce problème est traité en attribuant une priorité aux messages, cette priorité étant définie en fonction de l'utilisation réelle ou possible des messages par un utilisateur. A titre d'exemple, le flux de messages correspondant à un contenu en train d'être visualisé par un utilisateur reçoit la priorité la plus élevée, ceci afin d'éviter qu'un message de contrôle ne puisse pas être déchiffré et que l'utilisateur ait un écran noir.

Le flux correspondant à un contenu en cours d'enregistrement a également un niveau de priorité élevé, faute de quoi une partie de l'enregistrement risque de ne pas pouvoir être faite.

Le ou les flux prédictifs ont une priorité plus faible. Ces flux prédictifs correspondent aux canaux pour lesquels la probabilité de visualisation par l'utilisateur est la plus élevée. Ces canaux peuvent être les canaux ayant un numéro de canal immédiatement adjacent au canal actuellement regardé. Ils peuvent également être définis selon le profil de l'utilisateur.

Généralement, lorsque le module de sécurité doit traiter à la fois un flux correspondant au contenu visualisé, un flux pour un contenu en cours d'enregistrement et des flux prédictifs, le module de sécurité est fortement sollicité et la gestion d'autres flux devient problématique. Dans le cas où une mosaïque est affichée pour un utilisateur, avec les systèmes actuels, le contenu formant cette mosaïque provient d'un canal spécifique. En effet, dans les systèmes actuels, il n'est par exemple pas possible de déchiffrer suffisamment de messages pour afficher une mosaïque sur la base du contenu réel. Pour cette raison, il est indispensable d'utiliser un canal spécifique. La priorité pour ce genre de canaux peut être relativement basse, ce qui peut poser des problèmes tels que l'impossibilité d'afficher la mosaïque. De plus, il n'est pas possible de proposer une mosaïque personnalisée aux utilisateurs.

Dans les systèmes de l'art antérieur, les priorités sont fixes. Ainsi, dans certaines situations, l'utilisateur peut se retrouver devant un écran noir. Ceci pourrait notamment être le cas lorsque l'utilisateur zappe souvent et que le module de sécurité n'est pas en mesure de traiter tous les messages de contrôle qu'il reçoit.

US 2006/085828 A1 décrit une méthode et un appareil permettant de réduire un délai de changement de canal sur un poste de télévision.

F. Cottet, J. Delacroix, C. Kaiser et Z. Mammeri: "Ordonnancement temps réel", 31 décembre 2000, décrit la problématique liée à l'ordonnancement centralisé dans le cadre des applications temps réel.

## EXPOSE DE L'INVENTION

La présente invention se propose de résoudre les problèmes de l'art antérieur en réalisant une méthode de traitement des messages de contrôle qui permette de gérer ces messages de façon plus souple et plus efficace. Ce problème est résolu par l'objet des revendications principales présentées ci-dessous.

Des aspects supplémentaires sont présentés dans les revendications dépendantes.

Le but de l'invention est atteint par une méthode de traitement de messages de contrôle permettant l'accès à du contenu à accès conditionnel, cette méthode comportant les étapes suivantes :

• réception par un module de sécurité comprenant au moins une mémoire et un module de déchiffrement, d'au moins un message de contrôle;

• attribution d'un niveau de priorité audit message de contrôle, parmi au moins deux niveaux de priorité différents, l'un des niveaux de priorité étant dénommé haut et un autre niveau de priorité étant dénommé standard, un niveau de priorité standard étant attribué aux messages de contrôle qui ne sont pas un premier message de contrôle pour un canal déterminé et un niveau de priorité différent du niveau standard étant attribué aux messages de contrôle qui sont un premier message de contrôle pour un canal déterminé;

• association d'une valeur aux messages auxquels le niveau de priorité standard a été attribué, cette valeur étant attribuée selon une règle prédéfinie;

• attribution d'au moins une valeur de seuil pour la valeur associée aux messages ayant un niveau de priorité standard;

• comparaison entre la valeur de seuil pour un message déterminé et la valeur associée audit message;

• si aucune valeur associée auxdits messages de niveau de priorité standard ne dépasse la valeur de seuil correspondante, traitement des messages selon leur niveau de priorité, un message auquel le niveau de priorité élevé a été attribué étant traité avant un message auquel a été attribué un niveau de priorité inférieur et modification de la valeur associée aux messages de niveau de priorité standard selon ladite règle prédéfinie;

• si la valeur associée à l'un desdits messages de niveau de priorité standard dépasse la valeur de seuil pour le message correspondant, traitement de l'un des messages de niveau standard avant le traitement d'un message ayant un niveau de priorité plus élevé, et modification de la valeur associée aux messages de niveau de priorité standard selon ladite règle prédéfinie.

Le but de l'invention est également atteint par un module de sécurité comportant au moins un module à accès conditionnel (CAK), des moyens pour recevoir des messages classés en au moins deux catégories différentes et un module de traitement (SC) de ces messages, un niveau de priorité différent étant attribué aux messages de chaque catégorie différente, l'un desdits niveaux de priorité étant défini comme élevé et un autre niveau de priorité, inférieur au niveau de priorité élevée, étant défini comme niveau de priorité standard; une valeur étant associée aux messages auxquels le niveau de priorité standard a été attribué, cette valeur étant attribuée selon une règle prédéfinie; une valeur de seuil étant attribuée à la valeur associée aux messages ayant un niveau de priorité standard, ce module de sécurité étant caractérisé en ce qu'il comporte en outre des moyens pour comparer la valeur de seuil pour un message déterminé et la valeur associée audit message déterminé et des moyens de traitement des messages selon leur niveau de priorité, dans lesquels :

• si aucune valeur associée auxdits messages de niveau de priorité standard ne dépasse la valeur de seuil correspondante, les messages sont traités selon leur niveau de priorité, un message auquel le niveau de priorité élevé a été attribué étant traité avant un message auquel un niveau de priorité inférieur a été attribué et dans lesquels la valeur associée aux messages de niveau de priorité standard est modifiée selon ladite règle prédéfinie;

• si la valeur associée à l'un desdits messages de niveau de priorité standard dépasse la valeur de seuil pour le message correspondant, l'un des messages de niveau standard est traité avant un message ayant un niveau de priorité plus élevé, et la valeur associée aux messages de niveau de priorité standard est modifiée selon ladite règle prédéfinie.

Selon la méthode de l'invention, le traitement des messages de contrôle se fait de façon souple et efficace de manière à ce que l'utilisateur ne subisse pas de désagrément. Cette méthode est mise en œuvre dans un module de sécurité comportant au moins une unité de traitement et coopérant avec au moins une mémoire. Cette mémoire peut être intégrée au module de sécurité ou être placée dans un autre dispositif. Le module de sécurité coopère avec une unité multimédia ou fait partie de cette unité multimédia. Dans la suite de la description, nous supposerons que l'unité multimédia est formée d'un récepteur décodeur et d'un module de sécurité coopérant avec ce récepteur décodeur.

Selon cette invention, la méthode de traitement des messages de contrôle permet d'assurer un traitement optimal qui tienne compte des limitations imposées par les capacités de traitement du module de sécurité.

Selon cette méthode, les messages ne sont pas traités selon une priorité fixe et pré-établie, mais la gestion des messages est faite de façon souple, en fonction des circonstances. En particulier, l'ordre de traitement des messages dépend du moment auquel l'unité multimédia aura réellement besoin du contenu du message à traiter.

Selon un exemple de réalisation, il est par exemple possible de prévoir que le premier message de contrôle (ECM) reçu pour chaque canaux est associé à un niveau de priorité élevé, que les messages de contrôle suivants pour ces mêmes canaux soient dans un niveau de priorité inférieur au niveau élevé, que des messages de contrôle pour des canaux prédictifs soient classés dans une catégorie de niveau de priorité encore plus basse et que des messages de gestion EMM soient associés à une priorité encore plus basse. Cette invention définit une gestion "de base", selon laquelle les messages sont traités en commençant par les messages ayant la priorité la plus élevée, puis en poursuivant le traitement par les messages de niveau de priorité de plus en plus bas. Cette gestion "de base" peut ne pas être respectée lorsque certaines conditions sont remplies, ces conditions impliquant généralement un risque qu'un message correspondant à un contenu en cours de visualisation ou en cours d'enregistrement ne puisse pas être déchiffré à temps pour assurer un déchiffrement complet de l'événement. L'inversion de priorité reste valable aussi longtemps que les conditions de cette inversion sont remplies. Lorsque ces conditions ne sont plus remplies, l'ordre de traitement correspondant à la gestion de base est de nouveau respecté.

**DESCRIPTION SOMMAIRE DES DESSINS**

La présente invention et ses avantages seront mieux compris en référence aux figures annexées et à la description détaillée de modes de réalisation particuliers, dans lesquelles :

- les figures 1a à 1e illustrent un premier exemple de réalisation de l'invention;

- les figures 2a à 2g illustrent un deuxième exemple de gestion de messages selon la présente invention;

- les figures 3a à 3g illustrent un troisième exemple de déroulement de la méthode de l'invention; et

- les figures 4a à 4h représentent un quatrième exemple de déroulement de la méthode de l'invention;

- les figures 5a à 5d représentent un cinquième exemple ; et

- les figures 6a et 6b représentent un sixième exemple.

## MANIERES DE REALISER L'INVENTION

La présente invention concerne une méthode de traitement de messages destinés à la télévision à péage, en particulier de messages de contrôle contenant au moins un mot de contrôle (CW Control Word) permettant le déchiffrement de contenu chiffré et par conséquent, la visualisation de contenu à accès conditionnel. La méthode de l'invention permet également le traitement d'autres types de messages tels que des messages de gestion (EMM; Entitlement Management Messages), des messages de gestion impulsifs (IEMM, Impulsive Entitlement Management Messages) utilisés en particulier lors d'achats de produits, ou encore d'autres types de messages.

Cette méthode de traitement est mise en œuvre dans un module de sécurité formé d'un module à accès conditionnel et d'un module de traitement, ce module de sécurité faisant partie d'une unité multimédia. L'unité multimédia ou sa partie récepteur reçoit un flux de contenu chiffré. Le module de sécurité reçoit du récepteur, un flux de messages de contrôle ECM. Ce module de sécurité est notamment en charge de traiter les messages de contrôle qu'il reçoit, le traitement signifiant en particulier la vérification des droits d'accès, puis, si les droits d'accès sont présents et valides, le déchiffrement du message de façon à en extraire le ou les mots de contrôle. Lorsqu'un mot de contrôle est déchiffré, il est transmis à un module de désembrouillage du décodeur qui utilise ce mot de contrôle pour déchiffrer le contenu et pour l'afficher de façon à ce qu'il puisse être visualisé.

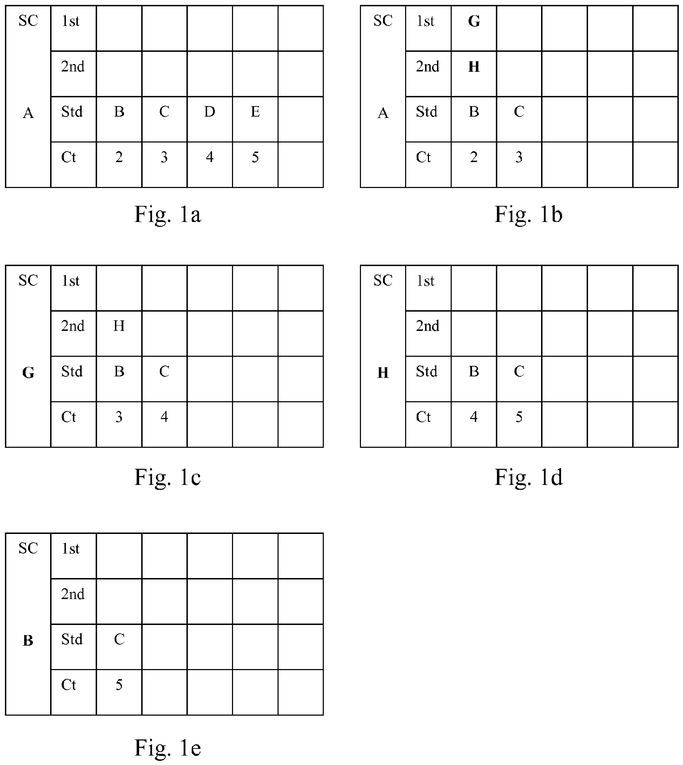

Les figures 1 à 6 illustrent de façon schématique, un module de sécurité SC comprenant au moins une mémoire et une unité de traitement. La mémoire peut être unique et comprendre plusieurs zones correspondant chacune à des données mémorisées différentes. Il est également possible de prévoir plusieurs mémoire, chacune d'entre elles stockant des données différentes. Une combinaison de ces deux variantes est également possible. Dans la suite de la description, il est supposé que le module de sécurité comprend une mémoire unique, partagée en plusieurs zones. Selon une variante, les fonctions du module de sécurité peuvent être réalisées par une application. Dans ce cas, le module de sécurité coopère avec une mémoire qui ne fait pas partie de ce module de sécurité.

Dans les figures 1 à 4, trois zones de mémoires sont associées à des messages de contrôle, chaque zone de la mémoire correspondant à un niveau de priorité différent. Une quatrième zone de la mémoire correspond à un compteur dont la fonction est expliquée en détail plus bas.

Dans l'exemple illustré par la figure 1, le module de sécurité est en charge de traiter des messages correspondant à plusieurs canaux notés A, B, C, D, E, G et H.

Trois niveaux de priorité sont associés aux messages de contrôle. Ces niveaux sont notés 1st pour le niveau de priorité le plus élevé, 2nd pour le niveau de priorité intermédiaire et Std pour le niveau de priorité le plus bas.

Le niveau de priorité le plus bas, noté Std, est dénommé niveau standard. Le niveau de priorité noté 1st correspond à une priorité haute et le niveau de priorité noté 2nd correspond à une priorité moyenne. Les niveaux de priorité différents du niveau standard, c'est-à-dire dans l'exemple considéré, les niveaux hauts et moyens, reçoivent uniquement des premiers messages de contrôle pour un canal déterminé. Un premier message est le premier message qui arrive lorsque les conditions viennent de changer. Un tel premier message arrive en particulier lorsque l'utilisateur a changé de canal.

Dans le cas où le système reçoit des messages correspondant à des canaux prédictifs, un premier message sera envoyé pour le canal sur lequel l'utilisateur vient de se connecter, ainsi que sur les canaux prédictifs liés à ce nouveau canal visualisé par l'utilisateur. Ces premiers messages sont tous mémorisés dans des mémoires associées aux niveaux de sécurité haut (1st) ou moyen (2nd). Plus précisément, le premier message correspondant au canal sur lequel l'utilisateur vient de zapper est généralement mémorisé dans la zone mémoire associée au niveau de priorité haut et les premiers messages correspondant aux canaux prédictifs sont généralement mémorisé dans la zone mémoire associée au niveau de priorité moyen. Lorsque le module de sécurité reçoit des messages suivants pour ces canaux, ces messages différents des premiers messages sont mémorisés dans une zone mémoire correspondant à un niveau de priorité standard. Dans les modes de réalisation illustrés par les figures 1 à 4, les messages sont mémorisés dans un ordre chronologique, les messages les plus récents étant illustrés dans la partie droite des figures et les messages les plus anciens dans la partie gauche.

La suite de la description est faite sur la base des exemples illustrés par les figures 1 à 6. Il est clair que ces exemples sont utilisés pour permettre de comprendre le principe de l'invention, mais qu'ils ne sont pas limitatifs.

Dans ces figures, la référence SC correspond au module de sécurité et plus précisément au module de traitement qui est en charge de traiter les messages de contrôle. La lettre qui figure sous la référence SC correspond au canal pour lequel un message est en cours de traitement. Les lignes horizontales correspondent à un niveau de priorité, un niveau de priorité déterminé pouvant être associé à une zone mémoire dans laquelle sont mémorisés les messages avant leur traitement. Ces messages sont traités, pour chaque ligne horizontale, selon le principe du First In First Out, le premier message mémorisé, c'est-à-dire celui représenté à gauche sur les figures, étant traité en premier.

Dans l'état représenté par la figure 1a, représentant l'état initial du module de sécurité SC, le module de traitement traite le message correspondant à un canal noté A. La mémoire de niveau de priorité standard Std du module de sécurité contient un message B correspondant à un premier canal, un message correspondant à un deuxième canal noté C, un message correspondant à un troisième canal noté D et un message correspondant à un quatrième canal noté E.

Les messages placés dans cette zone mémoire et correspondant au niveau de priorité standard, ne sont pas des premiers messages. La valeur de compteur du message du canal B est de 2, cette valeur étant définie comme suit. Un message (A) a été traité depuis la réception du message B par le module de sécurité. Le nombre de messages traités est donc de 1. Le rang du message B dans la mémoire correspondant au niveau standard est 1 puisqu'il est le premier message de la file correspondant à ce niveau de priorité. La valeur associé au message B est égal à la somme de ces deux valeurs, soit 1 + 1 = 2.

Le message du canal C est associé à la valeur 3 qui correspond à la somme de 1 (nombre de messages traités depuis la réception du message C) et de 2 (rang du message C dans la mémoire de niveau standard). Le message du canal D est associé à la valeur 4 et le message E du canal E est associé à la valeur 5.

Une valeur de seuil du compteur est également fixée. Elle est par exemple égale à 5 dans l'exemple utilisé. Cette valeur est connue du module de sécurité et/ou du module de traitement.

Supposons que l'utilisateur zappe du canal D au canal G. Le premier message du canal G est placé dans la mémoire correspondant à la priorité haute. Le canal H étant un canal prédictif (sur lequel l'utilisateur a de fortes chances de zapper), le premier message pour ce canal est mémorisé dans la mémoire correspondant au niveau de priorité moyen. Les messages notés D, qui correspondait au canal visualisé précédemment par l'utilisateur, ainsi que E qui était un canal prédictif, n'étant plus utile, les messages correspondant sont éliminés. Ceci est représenté par la figure 1b.

Dans la figure 1c, le message G correspondant à la priorité la plus élevée est traité par le module de traitement. Lorsque le module de traitement a traité un message, la valeur du compteur est modifiée selon une règle pré-établie, Dans les exemples des figures 1 à 4, cette règle pré-établie consiste à incrémenter la valeur du compteur de une unité pour chaque message traité. Comme un message a été traité, la valeur du compteur associée aux messages de niveau de priorité standard est incrémentée de 1, pour passer à 3 pour le message B correspondant au canal B et à 4 pour le message C du canal C.

Dans la situation correspondant à la figure 1d, le message du canal H est traité dans le module de traitement. La valeur de compteur pour le message B du canal B est incrémenté de 1 pour passer à 4. De manière similaire, la valeur pour le canal C passe à 5. Ces valeurs étant inférieures ou égales à la valeur de seuil (5), le traitement conventionnel se poursuit.

Dans l'étape correspondant à la figure 1e, comme les zones mémoire correspondant aux niveaux de priorité élevé et moyen sont vides, le premier message de la mémoire de niveau standard Std, c'est-à-dire B, est traité et le traitement des messages se poursuit de façon conventionnelle.

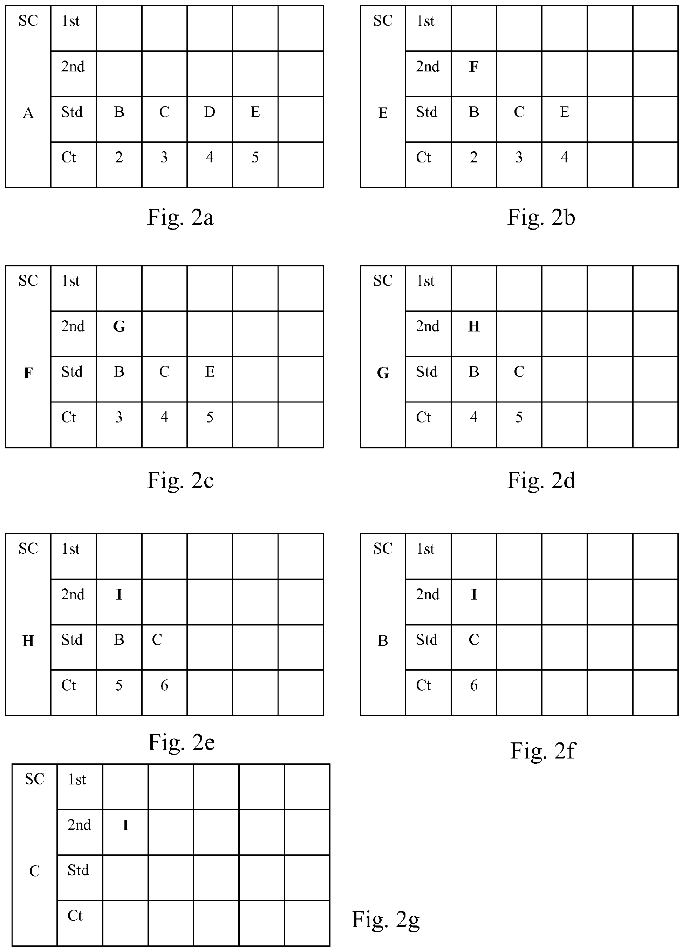

Dans l'exemple illustré par les figures 2a à 2g, la situation initiale est identique à ce qui est représenté par la figure 1. L'utilisateur zappe du canal D au canal E, qui était un canal prédictif. Dans ce cas, F devient un nouveau canal prédictif et le premier message du canal F est mémorisé dans la mémoire correspondant au niveau de priorité moyen (2nd). Ceci est représenté par la figure 2b. L'utilisateur zappe ensuite sur le canal F, le canal G devenant un canal prédictif. Le premier message du canal G est mémorisé dans la mémoire correspondant au niveau de priorité moyen 2nd pendant que le module de traitement traite le message du canal F. La valeur de compteur associée aux messages du niveau standard Std est incrémentée du fait que le message F a été traité. Cette valeur devient 3 pour B, 4 pour C et 5 pour E. Ceci est illustré par la figure 2c.

Dans la figure 2d, l'utilisateur zappe du canal F à G, le canal H devenant un canal prédictif. Le message G est traité et la valeur du compteur pour B et C passe respectivement à 4 et 5.

L'utilisateur zappe ensuite sur le canal H et reçoit un message correspondant au canal I comme canal prédictif. Ceci est illustré par la figure 2e. Le message I est mémorisé dans la mémoire correspondant au niveau de priorité moyen 2nd et les valeurs de compteur sont incrémentées pour passer à 5 pour B et 6 pour C. La valeur de seuil étant 5 et la valeur du compteur pour C étant supérieure à cette valeur de seuil, le premier message de la mémoire correspondant au niveau standard Std est traité, avant le message I correspondant à un niveau de priorité plus élevé que le niveau standard. Le message B sera donc traité dans le module de traitement. La valeur du compteur pour le message C restera supérieure à la valeur de seuil. De ce fait, le message C sera traité dans le module de traitement, avant le message I correspondant au niveau de sécurité moyen. Ceci est illustré par les figures 2e et 2f.

Dans la figure 2g, le niveau standard ne contient plus de message associé à une valeur de compteur supérieure à la valeur de seuil. Le message de niveau de sécurité le plus élevé, en l'occurrence I, peut alors être traité dans le module de traitement.

Le fait qu'un message du niveau de priorité standard a une valeur supérieure à la valeur de seuil a pour effet de déclencher le traitement d'un message de niveau de priorité standard, avant le traitement d'un message de niveau de priorité plus élevé. Il est à noter que ce n'est pas nécessairement le message ayant déclenché le changement de priorité qui est traité, mais le premier message de la file ou de la zone mémoire correspondant au niveau standard. Dans l'exemple illustré par la figure 2e, le fait que la valeur de compteur associée à un message C est supérieure à la valeur de seuil a pour effet de modifier l'ordre des priorités. Toutefois, le message suivant qui est traité est le message B, associé à une valeur égale à la valeur de seuil et non le message C, associé à une valeur plus élevée et ayant déclenché le changement de priorité.

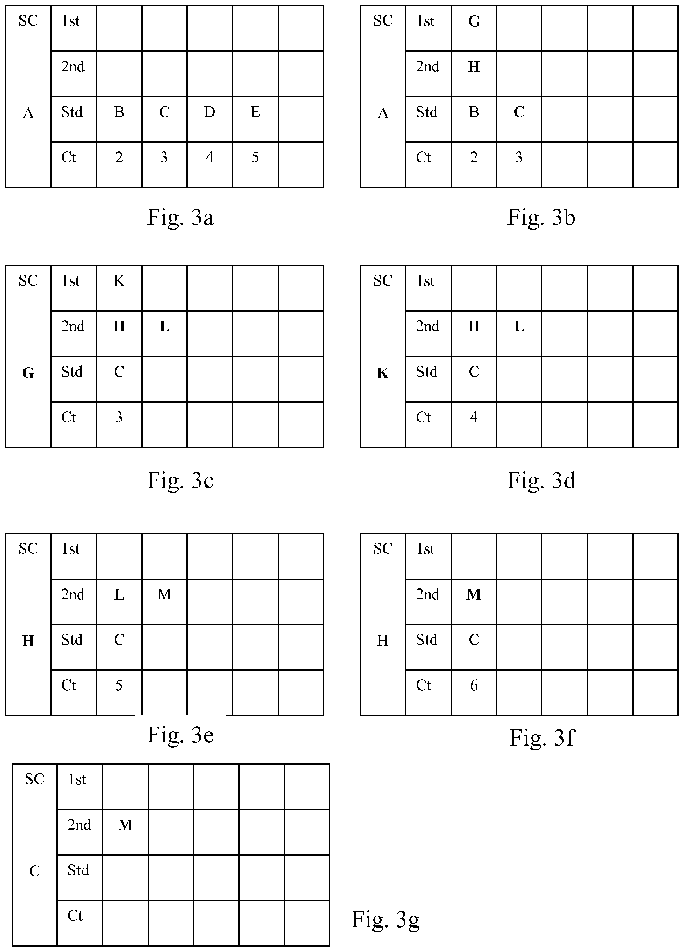

Dans le mode de réalisation illustré par les figures 3a à 3g, deux utilisateurs se partagent le même module de sécurité. Le deuxième utilisateur zappe du canal D au canal G alors que le premier utilisateur zappe du canal A au canal K. Le premier message du canal G est mémorisé dans la mémoire correspondant au niveau haut alors que le message correspondant au canal prédictif H est mémorisé dans la mémoire correspondant au niveau moyen. Ceci est illustré par la figure 3b. Le message du canal K est ensuite mémorisé dans la mémoire correspondant au niveau haut pendant que le message G est traité par le module de traitement. Ceci correspond à la figure 3c. La valeur du compteur pour le message C est incrémentée et les messages ayant le niveau de priorité le plus élevé sont traités. Ces messages sont dans l'ordre K, H et L. Ceci correspond aux figures 3d et 3e. Lorsque ces messages ont été traités, comme cela est illustré par la figure 3f, la valeur du compteur pour C est égale à 6, ce qui est supérieur à la valeur de seuil. Le premier message ayant un niveau de priorité standard, ici le message C, sera donc traité en priorité, avant le message M ayant un niveau de priorité plus élevé. Ceci est illustré par la figure 3g.

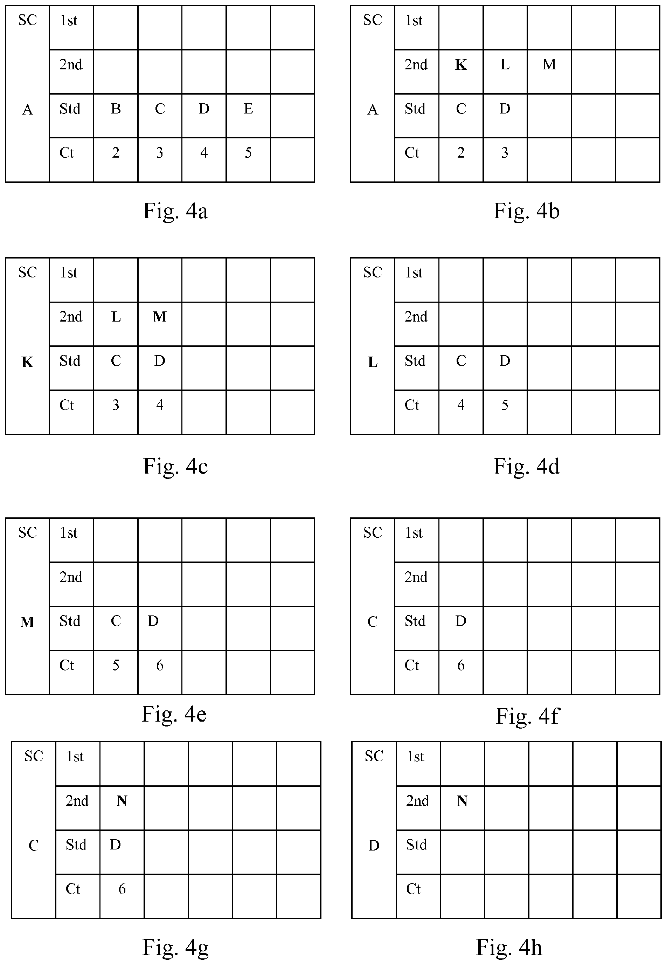

Dans le mode de réalisation illustré par les figures 4a à 4h, l'unité d'utilisateur reçoit des messages permettant de réaliser une mosaïque. Ces messages correspondent aux canaux K, L et M. Comme cela est illustré par les figures 4b à 4e, les messages K, L et M sont traités avant que la valeur du compteur pour les messages de niveau standard ne dépasse la valeur de seuil. Cette valeur de seuil est dépassée après le traitement du message M illustré à la figure 4e. Lorsque le module de sécurité reçoit un nouveau message N, de niveau de priorité moyen, il est mis en attente pour permettre le traitement préalable des messages C et D correspondant au niveau de priorité standard. Ceci est dû au fait que la valeur du compteur a dépassé la valeur de seuil par l'un des messages du niveau de priorité standard. Le traitement du message N est réalisé après que les messages de niveau de priorité standard aient été traités.

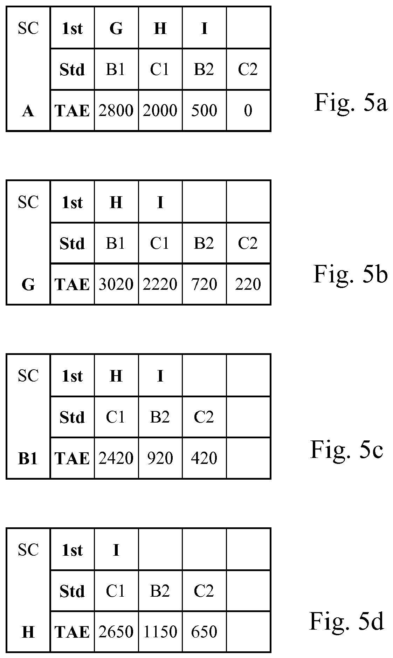

Dans l'exemple illustré par la figure 5, la configuration du module de sécurité est légèrement différente de celle des modules des modes de réalisation précédents. La mémoire contient deux niveaux de priorité, l'un d'eux correspondant à un niveau élevé, noté 1st et l'autre correspondant à un niveau plus bas, noté Std. et appelé niveau standard. Le niveau de priorité moyen présent dans les modes de réalisation des figures 1 à 4 est donc absent dans cet exemple. Le compteur contient des durées et l'incrémentation du compteur ne se fait pas par des pas de une unité, mais dépend d'une durée de traitement des messages, comme cela est expliqué plus bas.

Le module de sécurité contient des moyens pour déterminer une durée. Ces moyens peuvent être une horloge et des moyens pour déterminer l'instant entre le début et la fin du traitement d'un message. Ces moyens pour déterminer une durée peuvent également comprendre une horloge externe au module de sécurité, cette horloge communiquant des temps ou des durées au module de sécurité. Une manière de déterminer une durée comprend l'apposition d'une marque temporelle (Time Stamp) à chaque message.

En référence aux figures 5a à 5d, les messages ayant un niveau de priorité standard sont associés non plus à un nombre entier dépendant de leur place dans une file, comme dans les exemples précédents, mais plutôt à une durée. Plus précisément, chaque message est associé à la durée de stockage dans la mémoire, ou en d'autres termes, à la durée entre le moment où ce message a été mémorisé dans la mémoire du module de sécurité et le moment présent, ce moment présent correspondant à l'instant auquel le module de sécurité vérifie quel est le prochain message à traiter. Cette durée est déterminée juste après avoir terminé le traitement d'un message.

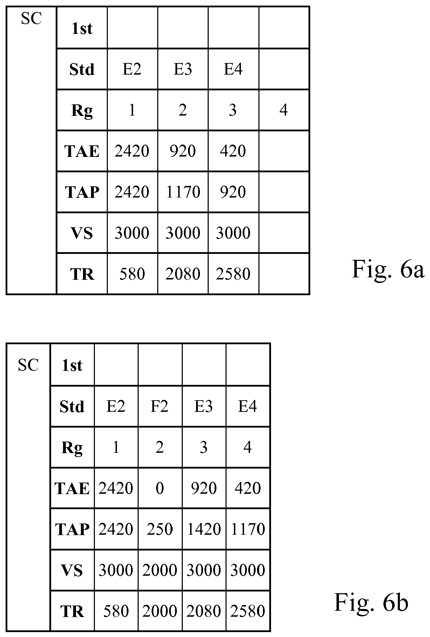

La valeur de seuil n'est plus un "petit" nombre entier lié, comme dans les modes de réalisation illustrés par les figures 1 à 4, au nombre de messages prioritaires qu'il est possible de traiter avant un message de niveau standard, sans que cela pose un problème. Dans l'exemple de la figure 5, comme d'ailleurs dans celui de la figure 6, la valeur de seuil est liée à une durée. Dans les exemples décrits, cette durée est mesurée en millisecondes. Elle pourrait être mesurée en une autre unité, par exemple en secondes ou même dans une unité de temps arbitraire. La durée pourrait également être mesurée en une valeur qui dépend d'une durée, par exemple un nombre d'impulsions, pour autant que ces impulsions soient délivrées selon un intervalle régulier.

Dans l'exemple des figures 5, supposons que les messages de niveau de priorité standard sont tous associés à une même valeur de seuil VS qui a été fixée à 3000 ms. Cette valeur de seuil dépend de la cryptopériode et du nombre de canaux pour lesquels des messages peuvent être envoyés pendant cette cryptopériode. Dans l'exemple de la figure 5a, pour chaque message de niveau de priorité standard, la cellule correspondante de la ligne notée TAE indique la valeur temporelle associée à ce message. Cette valeur temporelle, correspond au temps d'attente effectif ou en d'autres termes, au temps que le message a passé dans la mémoire. Le message B1 est par exemple associé à la valeur 2800 ms, ce qui signifie que ce message a été mémorisé il y a 2800 ms. Le message C1 est associé à la valeur 2000 ms et le message B2 à la valeur de 500 ms. Le message C2 est associé à la valeur 0, ce qui signifie qu'il vient d'être mémorisé par la mémoire du module de sécurité.

Comme dans les modes de réalisation précédents, la valeur associée aux messages mémorisés dans la mémoire du module de sécurité est comparée à la valeur de seuil. Selon un exemple avantageux, les messages sont mémorisés sous forme de file dans un ordre correspondant à un temps d'attente effectif TAE décroissant. Il suffit donc de comparer la valeur TAE du premier message de la file avec la valeur de seuil. Selon une variante, il est également possible de comparer la valeur de seuil avec les valeurs associées à tous les messages.

Dans l'exemple illustré par la figure 5a, la valeur la plus élevée associée à un message est 2800 ms pour le message B1. Cette valeur est inférieure à la valeur de seuil qui est de 3'000 ms. Dans ce cas, les messages sont traités en fonction de leur niveau de priorité. Le message de niveau de priorité le plus élevé et le plus ancien mémorisé dans la mémoire du module de sécurité est le message G. Celui-ci est traité de façon conventionnelle. La figure 5b illustre l'état de la mémoire après le traitement du message G, en supposant que le traitement de ce message a duré 220 ms. La valeur associée à chaque message de niveau de priorité standard est modifiée selon une règle prédéfinie, la règle consistant dans le cas présent, à ajouter le temps de traitement effectif du message précédent, ce qui revient à mesurer le temps d'attente effectif TAE de chaque message. Selon cet exemple, une durée de 220 ms est donc ajoutée à chaque valeur TAE associée aux différents messages de niveau de priorité standard. La valeur associée au message B1 est 2800 + 220 = 3020 ms. La valeur attribuée au message C1 est 2220 ms; elle est de 720 ms pour le message B2 et de 220 ms pour le message C2.

La valeur la plus élevée, ici 3020 ms, est comparée à la valeur de seuil, qui a été fixée à 3000 ms. Cette valeur de seuil étant dépassée, le message B1 est traité en priorité, avant le traitement du message H qui a un degré de priorité plus élevé. Le traitement de ce message B1 est illustré par la figure 5c. Supposons que ce traitement a duré 200 ms. Une valeur de 200 ms est alors ajoutée à la valeur associée à chaque message de niveau de priorité standard.

Les nouvelles valeurs associées aux messages de niveau de priorité standard sont alors 2420 pour C1, 920 pour B2 et 420 pour C2. Comme aucune de ces valeurs ne dépasse la valeur de seuil, la priorité "normale" est respectée, ce qui signifie que le message le plus ancien, ayant le niveau de priorité le plus élevé est traité. Ce message est le message noté H dans l'exemple illustré par la figure 5d. Cet exemple a l'avantage de tenir compte du temps effectif que chaque message de niveau standard a passé dans la mémoire du module de sécurité.

Dans les modes de réalisation décrits précédemment, la valeur de seuil était commune à tous les messages ayant le niveau de priorité standard. Dans l'exemple illustré par la figure 6, au contraire, une valeur de seuil différente peut être attribuée à des messages différents. Ceci permet en particulier de gérer des messages pour des canaux dont les cryptopériodes sont différentes.

A cet effet, la mémoire des modules de sécurité comporte des zones mémoire différentes. Le module de sécurité comporte comme dans l'exemple illustré par la figure 5, une zone mémoire destinée à recevoir les messages de niveau de priorité élevée (1st) et une zone mémoire pour stocker le temps d'attente effectif TAE. En plus de ceci, elle comporte un compteur incrémental agencé pour mémoriser la position de chaque message dans la file. Ce compteur est désigné par Rg dans la figure 6.

Le module de sécurité comporte en outre une zone mémoire destinée à stocker un temps d'attente prévu TAP, une autre zone mémoire pour mémoriser la valeur de seuil et finalement une mémoire pour mémoriser le temps restant TR, ce temps restant étant défini comme la différence entre la valeur de seuil VS et le temps d'attente effectif TAE.

Comme cela est illustré par la figure 6b, certains messages (E2, E3, E4) ont une première valeur de seuil qui est de 3000 ms dans cet exemple, alors que le message F2 a une autre valeur de seuil, ici 2000 ms. Cette valeur de seuil est mémorisée avec chaque message. Les paramètres liés à un même message sont représentés dans une même colonne sur les figures 6a et 6b. Dans cet exemple, la valeur de seuil est contenue dans le message ECM lui-même, de préférence dans une partie en clair de ce message. De cette manière, la valeur de seuil peut être extraite du message de contrôle ECM avant d'avoir déchiffré ce message.

Comme cela est illustré par la figure 6a, chaque message est associé à un temps d'attente effectif TAE, une valeur de seuil VS et un temps d'attente prévisible. Ce temps d'attente prévisible dépend du temps d'attente effectif TAE et d'un rang du message dans la file, ce rang étant donné par la valeur du compteur incrémental pour ce message. Il dépend en outre d'un temps de traitement théorique P'. Selon une première forme de réalisation, ce temps de traitement théorique est la durée maximale nécessaire pour traiter un message de contrôle. Selon une deuxième forme de réalisation, le temps de traitement théorique est une moyenne des temps de traitement effectifs sur un certain nombre de messages, par exemple les 16 derniers messages. Dans l'exemple de la figure 6, ce temps de traitement maximal est de 250 ms. Ce temps de traitement maximal dépend essentiellement des capacités de traitement du module de sécurité.

Le temps d'attente prévisible TAP est égal au temps d'attente effectif TAE pour le premier message de la file de messages du niveau de priorité standard. Pour chaque message suivant de cette file, une durée correspondant au temps de traitement théorique est ajoutée. Le temps de traitement prévu peut être obtenu par le calcul suivant :

$$TAP = TAE + P' (Rg - 1)$$

où Rg est le rang du message dans la file.

Dans la figure 6a, on a donc TAP = 920 + 1 • 250 = 1170 pour E3 et 420 + 2 • 250 = 920 pour E4.

Finalement, une dernière valeur est associée à chaque message, cette valeur correspondant au temps restant TR avant d'atteindre la valeur de seuil VS. Ce temps restant est calculé par la différence entre la valeur de seuil VS et le temps d'attente effectif TAE. Pour le message E2, on a TR = 3000 - 2420 = 580 ms; on a 3000 - 920 = 2080 ms pour E3 et 3000 - 420 = 2580 ms pour E4.

Dans les modes de réalisation précédentes, les messages d'un niveau de priorité donné sont traités selon le principe du FIFO (First In First Out). Un message d'un niveau de priorité donné reçu par le module de sécurité est mémorisé à la fin de la file de messages de ce niveau de priorité.

Dans l'exemple illustré par les figures 6a et 6b, les messages du niveau de sécurité standard sont classés selon un ordre croissant des temps restant TR. Ainsi, dans l'exemple illustré par la figure 6b, le message F2 a une valeur de seuil de 2000 ms. Au moment de sa réception par le module de sécurité, le temps restant est égal à la valeur de seuil, soit 2000 ms. Ce temps restant est inférieur au temps restant pour les messages E3 et E4. Le message F2 est introduit entre le message E2 et le message E3, de façon à être traité après le message E2, mais avant le message E3. Cette manière de faire permet de tenir compte au mieux, des impératifs de traitement de chaque message individuel. En particulier, cela permet de tenir compte du fait que les messages peuvent être associés à des cryptopériodes ayant des durées différentes.

Dans l'exemple illustré par la figure 6, à la fin de chaque traitement d'un message, les valeurs des différents paramètres des messages de niveau de priorité standard sont recalculées. Le temps restant minimal est recherché. Si aucun message de niveau de priorité plus élevé que le niveau standard n'est en attente de traitement, le message ayant le temps restant le plus court est traité. Si le temps restant minimal pour un message est inférieur à la valeur de seuil, par exemple zéro, le message associé à ce temps restant négatif est traité en priorité, c'est-à-dire avant tout message de niveau de priorité plus élevé. Si le temps restant minimal est positif ou nul et si au moins un message de niveau de priorité plus élevé que le niveau standard est en attente de traitement, la priorité normale est respectée, c'est-à-dire que le message le plus ancien parmi les messages ayant le niveau de priorité le plus élevé est traité en premier lieu. Il est bien entendu possible de fixer une valeur de seuil à un nombre positif, par exemple 300 ms et de modifier l'ordre de traitement lorsque le temps restant passe en dessous de cette valeur de seuil de 300 ms. Cela évite dans la majorité des situations, d'avoir à gérer une valeur temporelle négative.

Le temps restant TR est calculé comme étant la différence entre la valeur de seuil VS et le temps d'attente effectif TAE dans l'exemple des figures 6.

Selon une variante, il est également possible de calculer le temps d'attente non pas en utilisant le temps d'attente effectif, mais le temps d'attente prévisible. On aura TR = VS - TAP. La valeur du temps d'attente prévisible TAP est calculée comme dans l'exemple des figures 5, avec TAP = TAE + P' (Rg - 1).

La présente invention permet de s'assurer que les messages standard, c'est-à-dire ceux qui ne sont pas des premiers messages pour un canal donné soient traités suffisamment tôt pour que l'utilisateur ait accès au contenu à accès conditionnel sans interruption. Elle permet également de gérer des messages provenant de sources utilisant des cryptopériodes différentes.

La présente invention a été décrite essentiellement avec des exemples utilisant deux ou trois niveaux de priorité et utilisant des messages de contrôle ECM. Il est possible de prévoir un nombre de niveaux de priorité bien plus élevé, par exemple jusqu'à 256 et traiter selon le même procédé, un mélange de messages de contrôle, de messages de gestion et d'autres messages.

## Revendications

1. Méthode de traitement de messages destinés à permettre l'accès à un contenu à accès conditionnel, comprenant les étapes suivantes:

réception d'une pluralité de messages par un module de sécurité comprenant au moins un module à accès conditionnel, CAK, et un module de traitement, ces messages étant classés en au moins deux catégories différentes;
attribution d'un niveau de priorité différent aux messages de chaque catégorie différente, l'un desdits niveau de priorité étant défini comme élevé et un autre niveau de priorité, inférieur au niveau de priorité élevée, étant défini comme niveau de priorité standard;
**caractérisée en ce qu'**elle comporte en outre les étapes suivantes:

association d'une valeur distincte à chaque message donné auquel le niveau de priorité standard a été attribué, cette valeur étant égale à un nombre de messages traités depuis la réception du message donné additionné au rang du message donné dans le niveau de priorité standard;
attribution d'au moins une valeur de seuil pour la valeur associée aux messages ayant un niveau de priorité standard;
comparaison entre la valeur de seuil pour un message déterminé et la valeur associée audit message;
tant qu'aucune valeur associée auxdits messages de niveau de priorité standard ne dépasse la valeur de seuil correspondante, traitement des messages selon leur niveau de priorité, un message auquel le niveau de priorité élevé a été attribué étant traité avant un message auquel a été attribué un niveau de priorité inférieur, et incrémentation de la valeur associée à chaque message de niveau de priorité standard d'une unité par message traité; et

si la valeur associée à l'un desdits messages de niveau de priorité standard dépasse la valeur de seuil pour le message correspondant, traitement du message de niveau standard ayant le rang 1 avant le traitement d'un message ayant un niveau de priorité plus élevé.

2. Méthode selon la revendication 1, dans laquelle le module à accès conditionnel est configuré pour gérer les priorités de la pluralité de messages, et le module de traitement est configuré pour vérifier la pluralité de messages.

3. Méthode selon la revendication 1, dans laquelle le module de sécurité comprend une première zone de mémoire pour stocker les messages de priorité élevée et une deuxième zone de mémoire pour stocker les messages de priorité standard.

4. Méthode selon la revendication 3, dans laquelle la première zone de mémoire stocke des messages correspondant à des flux prédictifs, les flux prédictifs correspondant à des flux de données ayant la plus haute probabilité qu'un utilisateur les visionne.

5. Méthode selon la revendication 3, dans laquelle le module de sécurité comprend en outre une troisième zone de mémoire pour stocker des messages de priorité moyenne et une quatrième zone de mémoire pour stocker des valeurs de compteur pour les messages de la pluralité.

6. Méthode selon la revendication 3, dans laquelle la première zone de mémoire stocke les messages correspondant à un canal en train d'être visualisé par un utilisateur, et la troisième zone de mémoire stocke des messages correspondant à des flux prédictifs.

7. Méthode selon la revendication 3, dans laquelle les messages de la pluralité de messages reçus sont stockés par ordre chronologique dans l'une au moins des première et deuxième zones de mémoire.

8. Module de sécurité comportant au moins un module à accès conditionnel, CAK, des moyens pour recevoir des messages classés en au moins deux catégories différentes et un module de traitement, SC, de ces messages, un niveau de priorité différent étant attribué aux messages de chaque catégorie différente, l'un desdits niveaux de priorité étant défini comme élevé et un autre niveau de priorité, inférieur au niveau de priorité élevée, étant défini comme niveau de priorité standard; une valeur distincte étant associée à chaque message auquel le niveau de priorité standard a été attribué, cette valeur étant égale, pour chaque message donné, à un nombre de messages traités depuis la réception du message donné additionné au rang du message donné dans le niveau de priorité standard; une valeur de seuil étant attribuée à la valeur associée aux messages ayant un niveau de priorité standard, ce module de sécurité étant **caractérisé en ce qu'**il comporte en outre des moyens pour comparer la valeur de seuil pour un message déterminé et la valeur associée audit message déterminé et des moyens de traitement des messages selon leur niveau de priorité, dans lesquels:

tant qu'aucune valeur associée auxdits messages de niveau de priorité standard ne dépasse la valeur de seuil correspondante, les messages sont traités selon leur niveau de priorité, un message auquel le niveau de priorité élevé a été attribué étant traité avant un message auquel un niveau de priorité inférieur a été attribué, et la valeur associée à chaque message de niveau de priorité standard est incrémentée d'une unité par message traité; et

si la valeur associée à l'un desdits messages de niveau de priorité standard dépasse la valeur de seuil pour le message correspondant, le message de niveau standard ayant le rang 1 est traité avant un message ayant un niveau de priorité plus élevé.

9. Module de sécurité selon la revendication 8, **caractérisé en ce qu'**il coopère avec une mémoire dans laquelle lesdits messages sont mémorisés.

10. Module de sécurité selon la revendication 9, **caractérisé en ce que** ladite mémoire est contenue dans ce module de sécurité.

11. Module de sécurité selon la revendication 8, **caractérisé en ce qu'**il comporte un compteur.

12. Module de sécurité selon la revendication 8, dans laquelle le module à accès conditionnel est configuré pour gérer les priorités de la pluralité de messages, et le module de traitement est configuré pour vérifier la pluralité de messages.

13. Module de sécurité selon la revendication 8, comprenant en outre une première zone de mémoire pour stocker les messages de priorité élevée et une deuxième zone de mémoire pour stocker les messages de priorité standard.

**14.** Module de sécurité selon la revendication 8, dans lequel la première zone de mémoire stocke des messages correspondant à des flux prédictifs, les flux prédictifs correspondant à des flux de données ayant la plus haute probabilité qu'un utilisateur les visionne.

**15.** Module de sécurité selon la revendication 8, comprenant en outre une troisième zone de mémoire pour stocker des messages de priorité moyenne et une quatrième zone de mémoire pour stocker des valeurs de compteur pour les messages de la pluralité.

**Patentansprüche**

**1.** Verfahren zur Verarbeitung von Nachrichten, die dazu bestimmt sind, einen Zugriff auf Inhalte mit bedingtem Zugriff zu erlauben, umfassend folgende Schritte:

Empfang einer Vielzahl von Nachrichten durch ein Sicherheitsmodul, das mindestens ein Modul für bedingten Zugriff, CAK, und ein Verarbeitungsmodul umfasst, wobei die Nachrichten in mindestens zwei verschiedene Kategorien eingeteilt werden;
Zuweisung einer unterschiedlichen Prioritätsstufe an die Nachrichten jeder verschiedenen Kategorie, wobei eine der genannten Prioritätsstufen als hoch und eine andere Prioritätsstufe, die niedriger als die hohe Prioritätsstufe ist, als Standard-Prioritätsstufe definiert ist;
**dadurch gekennzeichnet, dass** es ferner folgende Schritte umfasst:

Zuordnung eines bestimmten Werts an jede gegebene Nachricht, der die Standard-Prioritätsstufe zugewiesen wurde, wobei dieser Wert einer Anzahl von seit dem Empfang der gegebenen Nachricht verarbeiteten Nachrichten entspricht, die zum Rang der gegebenen Nachricht in der Standard-Prioritätsstufe addiert wird;
Zuweisung mindestens eines Schwellenwertes für den Wert, der den Nachrichten mit einer Standard-Prioritätsstufe zugeordnet ist;
Vergleich zwischen dem Schwellenwert für eine bestimmte Nachricht und dem dieser Nachricht zugeordneten Wert;
solange kein den Nachrichten mit Standard-Prioritätsstufe zugeordneter Wert den entsprechenden Schwellenwert überschreitet, Verarbeitung der Nachrichten entsprechend ihrer Prioritätsstufe, wobei eine Nachricht, der die hohe Prioritätsstufe zugewiesen wurde, vor einer Nachricht verarbeitet wird, der eine niedrigere Prioritätsstufe zugewiesen wurde, und Inkrementierung des jeder Nachricht der Standard-Prioritätsstufe zugeordneten Wertes um eine Einheit pro verarbeitete Nachricht; und
wenn der einer der genannten Nachrichten mit Standard-Prioritätsstufe zugeordnete Wert den Schwellenwert für die entsprechende Nachricht überschreitet, Verarbeitung der Nachricht mit Standardstufe mit Rang 1 vor der Verarbeitung einer Nachricht mit einer höheren Prioritätsstufe.

**2.** Verfahren nach Anspruch 1, wobei das Modul für bedingten Zugriff so konfiguriert ist, dass es die Prioritäten der Vielzahl von Nachrichten verwaltet, und das Verarbeitungsmodul so konfiguriert ist, dass es die Vielzahl von Nachrichten prüft.

**3.** Verfahren nach Anspruch 1, wobei das Sicherheitsmodul einen ersten Speicherbereich zum Speichern von Nachrichten mit hoher Priorität und einen zweiten Speicherbereich zum Speichern von Nachrichten mit Standardpriorität umfasst.

**4.** Verfahren nach Anspruch 3, wobei der erste Speicherbereich Nachrichten speichert, die prädiktiven Strömen entsprechen, wobei die prädiktiven Ströme Datenströmen entsprechen, die die höchste Wahrscheinlichkeit haben, von einem Benutzer betrachtet zu werden.

**5.** Verfahren nach Anspruch 3, wobei das Sicherheitsmodul ferner einen dritten Speicherbereich zum Speichern von Nachrichten mittlerer Priorität und einen vierten Speicherbereich zum Speichern von Zählerwerten für die Vielzahl von Nachrichten aufweist.

**6.** Verfahren nach Anspruch 3, wobei der erste Speicherbereich Nachrichten speichert, die einem von einem Benutzer betrachteten Kanal entsprechen, und der dritte Speicherbereich Nachrichten speichert, die prädiktiven Strömen entsprechen.

**7.** Verfahren nach Anspruch 3, wobei die Vielzahl der empfangenen Nachrichten in chronologischer Reihenfolge in mindestens einem der ersten und zweiten Speicherbereiche gespeichert werden.

**8.** Sicherheitsmodul, das mindestens ein Modul für bedingtem Zugriff, CAK, Mittel zum Empfang von in mindestens zwei verschiedenen Kategorien eingeteilten Nachrichten und ein Modul zur Verarbeitung dieser Nachrichten, SC, umfasst, wobei den Nachrichten jeder verschiedenen Kategorie eine verschiedene Prioritätsstufe zugewiesen wird, wobei eine der genannten Prioritätsstufen als hoch und eine andere der Prioritätsstufen, die niedriger als die hohe Prioritätsstufe ist, als Standard-Prioritätsstufe definiert ist; wobei jeder Nachricht, der die Standard-Prioritätsstufe zugewiesen wurde, ein bestimmter Wert zugeordnet wird, wobei dieser Wert einer Anzahl von seit dem Empfang der gegebenen Nachricht verarbeiteten Nachrichten entspricht, die zum Rang der gegebenen Nachricht in der Standard-Prioritätsstufe addiert wird; wobei dem Wert, der den Nachrichten mit Standardprioritätsstufe zugeordnet ist, ein Schwellenwert zugewiesen wird, wobei dieses Sicherheitsmodul **dadurch gekennzeichnet ist, dass** es außerdem Mittel zum Vergleich des Schwellenwertes für eine gegebene Nachricht mit dem der gegebenen Nachricht zugeordneten Wert sowie Mittel zur Verarbeitung der Nachrichten gemäß ihrer Prioritätsstufe umfasst, wobei:

solange kein den genannten Nachrichten mit Standard-Prioritätsstufe zugeordneter Wert den entsprechenden Schwellenwert überschreitet, die Nachrichten entsprechend ihrer Prioritätsstufe verarbeitet werden, wobei eine Nachricht, der die hohe Prioritätsstufe zugewiesen wurde, vor einer Nachricht verarbeitet wird, der eine niedrigere Prioritätsstufe zugewiesen wurde, und der jeder Nachricht der Standard-Prioritätsstufe zugeordnete Wert um eine Einheit pro verarbeitete Nachricht inkrementiert wird; und wenn der einer der genannten Nachrichten mit Standard-Prioritätsstufen zugeordnete Wert den Schwellenwert für die entsprechende Nachricht überschreitet, die Nachricht mit Standardstufe mit Rang 1 vor einer Meldung mit einer höheren Prioritätsstufe verarbeitet wird.

9. Sicherheitsmodul nach Anspruch 8, **dadurch gekennzeichnet, dass** es mit einem Speicher zusammenarbeitet, in dem die Nachrichten gespeichert sind.

10. Sicherheitsmodul nach Anspruch 9, **dadurch gekennzeichnet, dass** der genannte Speicher in diesem Sicherheitsmodul enthalten ist.

11. Sicherheitsmodul nach Anspruch 8, **dadurch gekennzeichnet, dass** es einen Zähler umfasst.

12. Sicherheitsmodul nach Anspruch 8, wobei das Modul für bedingten Zugriff so konfiguriert ist, dass es die Prioritäten der Vielzahl von Nachrichten verwaltet, und das Verarbeitungsmodul so konfiguriert ist, dass es die Vielzahl von Nachrichten prüft.

13. Sicherheitsmodul nach Anspruch 8, das ferner einen ersten Speicherbereich zum Speichern von Nachrichten hoher Priorität und einen zweiten Speicherbereich zum Speichern von Nachrichten mit Standardpriorität umfasst.

14. Sicherheitsmodul nach Anspruch 8, wobei der erste Speicherbereich Nachrichten speichert, die prädiktiven Strömen entsprechen, wobei die prädiktiven Ströme Datenströmen entsprechen, die die höchste Wahrscheinlichkeit haben, von einem Benutzer betrachtet zu werden.

15. Sicherheitsmodul nach Anspruch 8, das ferner einen dritten Speicherbereich zum Speichern von Nachrichten mittlerer Priorität und einen vierten Speicherbereich zum Speichern von Zählerwerten für die Vielzahl von Nachrichten umfasst.

## Claims

1. A method of processing messages for providing access to conditional access content, comprising the following steps of:

receiving a plurality of messages by way of a security module comprising at least one conditional access module, CAK, and a processing module, said messages being classified into at least two different categories;
assigning a different level of priority to the messages of each different category, one of said priority levels being defined as high and another priority level, lower than the high priority level, being defined as a standard priority level;
**characterized in that** it further comprises the steps of:

associating a distinct value with each given message to which the standard priority level has been assigned, this value being equal to a number of messages processed since receipt of the given message added to the rank of the given message in the standard priority level;
assigning at least one threshold value for the value associated with the messages having a standard priority level;
comparing the threshold value for a given message with the value associated with said message;
as long as no value associated with said standard priority level messages exceeds the corresponding threshold value, processing the messages according to their priority level, a message to which the high priority level has been assigned being processed before a message to which a lower priority level has been assigned, and incrementing the value associated with each standard priority level message by one unit per processed message; and

if the value associated with one of said standard priority level messages exceeds the threshold value for the corresponding message, processing the standard level message having rank 1 before processing a message having a higher priority level.

2. The method according to claim 1, wherein the conditional access module is configured to manage the priorities of the plurality of messages, and the processing module is configured to check the plurality of messages.

3. The method according to claim 1, wherein the safety module comprises a first memory area for storing high priority messages and a second memory area for storing standard priority messages.

4. The method according to claim 3, wherein the first memory area stores messages corresponding to predictive streams, the predictive streams corresponding to data streams having the highest probability of being viewed by a user.

5. The method according to claim 3, wherein the security module further comprises a third memory area for storing medium priority messages and a fourth memory area for storing counter values for the plurality of messages.

6. The method according to claim 3, wherein the first memory area stores messages corresponding to a channel being viewed by a user, and the third memory area stores messages corresponding to predictive streams.

7. The method according to claim 3, wherein the messages of the plurality of received messages are stored in chronological order in at least one of the first and second memory areas.

8. A security module comprising at least one conditional access module, CAK, means for receiving messages classified in at least two different categories and a module, SC, for processing these messages, a different priority level being assigned to the messages of each different category, one of said priority levels being defined as high and another priority level, lower than the high priority level, being defined as a standard priority level; a distinct value being associated with each message to which the standard priority level has been assigned, this value being equal, for each given message, to a number of messages processed since receipt of the given message added to the rank of the given message in the standard priority level; a threshold value being assigned to the value associated with the messages having a standard level of priority, this safety module being **characterized in that** it further comprises means for comparing the threshold value for a given message with the value associated with said given message and means for processing the messages according to their level of priority, wherein:

as long as no value associated with said messages of standard priority level exceeds the corresponding threshold value, the messages are processed according to their priority level, a message to which the high priority level has been assigned being processed before a message to which a lower priority level has been assigned, and the value associated with each message of standard priority level is incremented by one unit per message processed; and

if the value associated with one of said standard priority level messages exceeds the threshold value for the corresponding message, the standard level message having rank 1 is processed before a message having a higher priority level.

9. The security module according to claim 8, **characterized in that** it cooperates with a memory in which said messages are stored.

10. The security module according to claim 9, **characterized in that** said memory is contained in this security module.

11. The security module according to claim 8, **characterized in that** it comprises a counter.

12. The security module according to claim 8, wherein the conditional access module is configured to manage the priorities of the plurality of messages, and the processing module is configured to check the plurality of messages.

13. The security module according to claim 8, further comprising a first memory area for storing high priority messages and a second memory area for storing standard priority messages.

14. The security module according to claim 8, wherein the first memory area stores messages corresponding to predictive streams, the predictive streams corresponding to data streams having the highest probability of being viewed by a user.

15. The security module according to claim 8, further comprising a third memory area for storing messages of medium priority and a fourth memory area for storing counter values for the plurality of messages.

| SC | 1st | | | | |
|---|---|---|---|---|---|
| | 2nd | | | | |
| A | Std | B | C | D | E |
| | Ct | 2 | 3 | 4 | 5 |

Fig. 1a

| SC | 1st | **G** | | | |
|---|---|---|---|---|---|
| | 2nd | **H** | | | |
| A | Std | B | C | | |
| | Ct | 2 | 3 | | |

Fig. 1b

| SC | 1st | | | | |
|---|---|---|---|---|---|
| | 2nd | H | | | |
| **G** | Std | B | C | | |
| | Ct | 3 | 4 | | |

Fig. 1c

| SC | 1st | | | | |
|---|---|---|---|---|---|
| | 2nd | | | | |
| **H** | Std | B | C | | |
| | Ct | 4 | 5 | | |

Fig. 1d

| SC | 1st | | | | |
|---|---|---|---|---|---|
| | 2nd | | | | |
| **B** | Std | C | | | |
| | Ct | 5 | | | |

Fig. 1e

| SC | 1st | | | | | |
|---|---|---|---|---|---|---|
| | 2nd | | | | | |
| A | Std | B | C | D | E | |
| | Ct | 2 | 3 | 4 | 5 | |

Fig. 2a

| SC | 1st | | | | | |
|---|---|---|---|---|---|---|
| | 2nd | F | | | | |
| E | Std | B | C | E | | |
| | Ct | 2 | 3 | 4 | | |

Fig. 2b

| SC | 1st | | | | | |
|---|---|---|---|---|---|---|
| | 2nd | G | | | | |
| F | Std | B | C | E | | |
| | Ct | 3 | 4 | 5 | | |

Fig. 2c

| SC | 1st | | | | | |
|---|---|---|---|---|---|---|
| | 2nd | H | | | | |
| G | Std | B | C | | | |
| | Ct | 4 | 5 | | | |

Fig. 2d

| SC | 1st | | | | | |
|---|---|---|---|---|---|---|
| | 2nd | I | | | | |
| H | Std | B | C | | | |
| | Ct | 5 | 6 | | | |

Fig. 2e

| SC | 1st | | | | | |
|---|---|---|---|---|---|---|
| | 2nd | I | | | | |
| B | Std | C | | | | |
| | Ct | 6 | | | | |

Fig. 2f

| SC | 1st | | | | | |
|---|---|---|---|---|---|---|
| | 2nd | I | | | | |
| C | Std | | | | | |
| | Ct | | | | | |

Fig. 2g

| SC | 1st | | | | |
|---|---|---|---|---|---|
| | 2nd | | | | |
| A | Std | B | C | D | E |
| | Ct | 2 | 3 | 4 | 5 |

Fig. 3a

| SC | 1st | G | | | |
|---|---|---|---|---|---|
| | 2nd | H | | | |
| A | Std | B | C | | |
| | Ct | 2 | 3 | | |

Fig. 3b

| SC | 1st | K | | | |
|---|---|---|---|---|---|
| | 2nd | H | L | | |
| G | Std | C | | | |
| | Ct | 3 | | | |

Fig. 3c

| SC | 1st | | | | |
|---|---|---|---|---|---|
| | 2nd | H | L | | |
| K | Std | C | | | |
| | Ct | 4 | | | |

Fig. 3d

| SC | 1st | | | | |
|---|---|---|---|---|---|
| | 2nd | L | M | | |
| H | Std | C | | | |
| | Ct | 5 | | | |

Fig. 3e

| SC | 1st | | | | |
|---|---|---|---|---|---|
| | 2nd | M | | | |
| H | Std | C | | | |
| | Ct | 6 | | | |

Fig. 3f

| SC | 1st | | | | |
|---|---|---|---|---|---|
| | 2nd | M | | | |
| C | Std | | | | |
| | Ct | | | | |

Fig. 3g

| SC | 1st | | | | |
|---|---|---|---|---|---|
| | 2nd | | | | |
| A | Std | B | C | D | E |
| | Ct | 2 | 3 | 4 | 5 |

Fig. 4a

| SC | 1st | | | | |
|---|---|---|---|---|---|
| | 2nd | **K** | L | M | |
| A | Std | C | D | | |
| | Ct | 2 | 3 | | |

Fig. 4b

| SC | 1st | | | | |
|---|---|---|---|---|---|
| | 2nd | **L** | **M** | | |
| **K** | Std | C | D | | |
| | Ct | 3 | 4 | | |

Fig. 4c

| SC | 1st | | | | |
|---|---|---|---|---|---|
| | 2nd | | | | |
| **L** | Std | C | D | | |
| | Ct | 4 | 5 | | |

Fig. 4d

| SC | 1st | | | | |
|---|---|---|---|---|---|
| | 2nd | | | | |
| **M** | Std | C | D | | |
| | Ct | 5 | 6 | | |

Fig. 4e

| SC | 1st | | | | |
|---|---|---|---|---|---|
| | 2nd | | | | |
| C | Std | D | | | |
| | Ct | 6 | | | |

Fig. 4f

| SC | 1st | | | | |
|---|---|---|---|---|---|
| | 2nd | **N** | | | |
| C | Std | D | | | |
| | Ct | 6 | | | |

Fig. 4g

| SC | 1st | | | | |
|---|---|---|---|---|---|
| | 2nd | **N** | | | |
| D | Std | | | | |
| | Ct | | | | |

Fig. 4h

| SC | 1st | G | H | I | |
|---|---|---|---|---|---|
| | Std | B1 | C1 | B2 | C2 |
| A | TAE | 2800 | 2000 | 500 | 0 |

Fig. 5a

| SC | 1st | H | I | | |
|---|---|---|---|---|---|
| | Std | B1 | C1 | B2 | C2 |
| G | TAE | 3020 | 2220 | 720 | 220 |

Fig. 5b

| SC | 1st | H | I | | |
|---|---|---|---|---|---|
| | Std | C1 | B2 | C2 | |
| B1 | TAE | 2420 | 920 | 420 | |

Fig. 5c

| SC | 1st | I | | | |
|---|---|---|---|---|---|
| | Std | C1 | B2 | C2 | |
| H | TAE | 2650 | 1150 | 650 | |

Fig. 5d

| SC | 1st | | | | |
|----|-----|------|------|------|---|
| | Std | E2 | E3 | E4 | |
| | Rg | 1 | 2 | 3 | 4 |
| | TAE | 2420 | 920 | 420 | |
| | TAP | 2420 | 1170 | 920 | |
| | VS | 3000 | 3000 | 3000 | |
| | TR | 580 | 2080 | 2580 | |

Fig. 6a

| SC | 1st | | | | |
|----|-----|------|------|------|------|
| | Std | E2 | F2 | E3 | E4 |
| | Rg | 1 | 2 | 3 | 4 |
| | TAE | 2420 | 0 | 920 | 420 |
| | TAP | 2420 | 250 | 1420 | 1170 |
| | VS | 3000 | 2000 | 3000 | 3000 |
| | TR | 580 | 2000 | 2080 | 2580 |

Fig. 6b

## RÉFÉRENCES CITÉES DANS LA DESCRIPTION

**Documents brevets cités dans la description**

- US 2006085828 A1

**Littérature non-brevet citée dans la description**

- **F. COTTET ; J. DELACROIX ; C. KAISER ; Z. MAM-MERI.** *Ordonnancement temps réel,* 31 Décembre 2000